# FASCICULE DE BREVET EUROPEEN

(11) **EP 1 446 653 B1**
(45) Date de publication et mention de la délivrance du brevet: **15.10.2008**
(21) Numéro de dépôt: 02795388.4
(22) Date de dépôt: 20.11.2002
(51) Int. Cl.: G01N 21/55, G01N 21/64

(54) **DISPOSITIF PERFECTIONNE DU TYPE BIO-PUCE**
VERBESSERTER BIOCHIP
IMPROVED BIOCHIP DEVICE

(30) Priorité: 22.11.2001 FR 0115140
(43) Date de publication de la demande: 18.08.2004
(73) Titulaire: Centre National De La Recherche Scientifique-CNRS, 75797 Paris Cedex 16 (FR); ECOLE POLYTECHNIQUE, 91128 Palaiseau cedex (FR); Université de Versailles Saint-Quentin-en-Yvelines, 78000 Versailles (FR)
(72) Inventeur: WEISBUCH, Claude, F-75013 Paris (FR); BENISTY, Henri, F-92120 Palaiseau (FR)
(74) Mandataire: Ramey, Daniel
(86) Numéro de dépôt international: PCT/FR2002/003975
(87) Numéro de publication internationale: WO 2003/044501

(56) Documents cités:
- DE-A- 19 947 616
- FR-A- 2 793 560
- FR-A- 2 801 977

## Description

L'invention concerne un dispositif perfectionné du type bio-puce, comprenant un substrat, des éléments chromophores portés par le substrat, et des moyens de récupération et de concentration de la lumière émise par les éléments chromophores.

Les techniques connues de détection et de quantification de molécules chimiques ou biologiques, notamment d'acides nucléiques, d'oligonucléotides, de protéines, de séquences polypeptidiques ou de fragments de ces composés, utilisent des dispositifs du type bio-puces comprenant des substrats en général en verre, en silice, en métal ou en nylon, sur lesquels sont fixés des ligands spécifiques (des «sondes») des molécules à analyser. Les molécules d'un échantillon mises en présence de ces ligands se couplent aux ligands qui leur sont appariés. On excite par un rayonnement sensiblement monochromatique des éléments chromophores associés à ces molécules et qui émettent en réponse une luminescence ou phosphorescence à une autre longueur d'onde, ce qui permet de repérer les molécules couplées aux sondes.

Les éléments chromophores sont formés par les molécules elles-mêmes ou bien sont fixés ou greffés sur ces molécules, ou bien encore peuvent être formés par le substrat lui-même sur lequel les molécules viennent se greffer et dont les propriétés émissives dépendent de la présence et de la nature des molécules greffées.

Dans les dispositifs connus, les sondes sont fixées en réseau sur les substrats et situées à des emplacements connus. Les signaux lumineux émis par les éléments chromophores permettent d'une part de localiser les sondes auxquelles des molécules sont couplées et de quantifier les quantités de molécules couplées à ces sondes. Il faut toutefois un nombre relativement élevé (10⁴) de molécules d'une même catégorie pour obtenir un signal lumineux exploitable. De plus, on tend à placer un nombre toujours plus grand de sondes sur des substrats de très faibles dimensions, de sorte qu'il devient très difficile de localiser avec une précision suffisante et donc d'identifier les sondes portant les éléments chromophores qui sont à l'origine des signaux lumineux détectés.

Les solutions classiques habituellement mises en oeuvre pour résoudre ce problème consistent à augmenter le signal d'excitation des éléments chromophores pour augmenter la réponse lumineuse de ces derniers, ou bien à augmenter les quantités de molécules couplées et/ou de sondes, mais ces moyens sont peu satisfaisants pour des raisons de bilan énergétique faible et de coût. L'augmentation de l'intensité d'excitation lumineuse s'accompagne d'un risque de photodégradation des molécules, et l'augmentation des quantités de molécules couplées et de sondes nécessite une augmentation des quantités de réactifs utilisés, qui sont coûteux.

D'autres moyens connus utilisent des systèmes de détection optique à très grande ouverture numérique et/ou à immersion (pour augmenter l'indice de réfraction) mais sont peu compatibles avec les besoins de balayage rapide des réseaux de sondes sur les substrats.

On a également proposé d'associer à ces dispositifs du type bio-puces divers moyens permettant de récupérer une plus grande partie de la lumière émise par les éléments chromophores en réponse à une excitation lumineuse, et de concentrer ou guider la lumière récupérée vers des moyens de détection et de mesure.

Le document FR 2 793 560-A1 décrit un support du type biopuce comprenant une pluralité de sites d'analyse susceptibles d'être garnis de réactifs et associés à une pluralité de microcavités résonantes émettrices de lumière par des microlentilles.

Le document DE 19947616-A1 décrit un support de type biopuce dont la face supérieure comprend un guide d'onde planaire pour le guidage de la lumière d'excitation ou de la fluorescence émise par les molécules fixées sur le support.

Le document WO 02/16912-A1 décrit un dispositif du type biopuce comportant des moyens d'extraction de lumière en mode guidé, formés par une configuration tridimensionnelle diffractante de la couche supérieure du substrat qui porte des éléments chromophores.

La présente invention a notamment pour but d'augmenter la sensibilité des mesures grâce à une modification de l'environnement optique de chaque élément chromophore, qui permet de récupérer et de concentrer vers des moyens de détection et de mesure une plus grande partie de la lumière émise par les éléments chromophores.

Elle propose à cet effet un dispositif perfectionné du type bio-puce, comprenant un substrat qui comporte un miroir multicouche non absorbant recouvert d'une couche supérieure qui porte des éléments chromophores, et des moyens de récupération de la lumière émise par les éléments chromophores en réponse à une excitation lumineuse, ces moyens comprenant des moyens d'extraction de lumière en mode guidé formés par une configuration ou structuration tridimensionnelle diffractante de ladite couche supérieure, caractérisé en ce que la couche supérieure est en matériau à indice de réfraction supérieur ou égal à 1,6, les éléments chromophores étant agencés en bandes parallèles sur ladite couche supérieure et les moyens d'extraction de lumière étant agencés sur les côtés des bandes d'éléments chromophores.

Dans le dispositif selon l'invention, chaque élément chromophore porté par la couche de matériau d'indice élevé, rayonne la majeure partie de son émission lumineuse dans ce matériau à des angles qui sont en dessous de l'angle critique, de sorte que ce rayonnement est converti en mode guidé dans la couche de matériau d'indice élevé. La configuration ou structuration tridimensionnelle diffractante de cette couche au voisinage de chaque bande d'éléments chromophores permet d'extraire le rayonnement en mode guidé et de le diriger vers des moyens de détection et de mesure.

Ainsi, une majeure partie du rayonnement émis par chaque élément chromophore peut être récupérée et exploitée.

Avantageusement, la configuration ou structuration tridimensionnelle diffractante de la couche de matériau à indice élevé comprend des cristaux ou quasi-cristaux photoniques planaires, formés par des ensembles de trous percés à travers ladite couche, les dimensions et espacements de ces trous étant de l'ordre de grandeur de la longueur d'onde du rayonnement en mode guidé.

Selon une autre caractéristique de l'invention, la couche de matériau à indice de réfraction élevé, le miroir multicouche non absorbant précité et le dioptre entre le matériau à indice de réfraction élevé et le milieu environnant (gaz ou liquide) constitue une microcavité planaire résonante.

Cette microcavité résonnante placée sous les éléments chromophores est d'épaisseur choisie pour renvoyer vers les moyens de détection et de mesure un maximum de la lumière émise par les éléments chromophores. L'effet dû à cette microcavité résonante se combine avec celui dû à l'extraction de la lumière en mode guidé dans la couche de matériau à indice élevé, pour assurer une efficacité maximale de la récupération et de la concentration de la lumière émise par chaque élément chromophore.

Selon encore une autre caractéristique de l'invention, ladite couche de matériau à indice de réfraction élevé constitue un guide d'onde planaire dans lequel est couplée la lumière d'excitation des éléments chromophores, soit par une tranche de ladite couche, soit au moyen d'au moins un réseau de couplage formé à la surface de cette couche.

L'excitation des éléments chromophores par la lumière guidée dans ladite couche est avantageuse, mais cette lumière d'excitation ne doit pas être extraite de cette couche par les moyens précités d'extraction de la lumière émise par les éléments chromophores.

Pour cela, les éléments chromophores de chaque bande sont excités par un faisceau lumineux collimaté à faible divergence, orienté dans la direction de la bande et ayant une largeur sensiblement inférieure ou égale à la dimension correspondante d'un élément chromophore.

Chaque bande d'éléments chromophores reçoit un faisceau lumineux d'excitation différent, qui peut se propager sur une distance de plusieurs millimètres en conservant une largeur relativement étroite et qui ne parvient pas aux moyens d'extraction précités qui se trouvent sur les côtés de la bande d'éléments chromophores.

De façon générale, le dispositif selon l'invention permet d'obtenir un rapport signal/bruit plus élevé que dans la technique antérieure et de rejeter de façon efficace la lumière d'excitation des éléments chromophores. Cela rend possible d'effectuer des mesures parallèles par imagerie sur le dispositif, et permet également d'étendre le fonctionnement de ce dispositif à une pluralité de longueurs d'onde.

Typiquement, l'efficacité de la collecte de la lumière émise par les éléments chromophores et la sensibilité totale de la mesure sont multipliées par un coefficient au moins égal à cinq, par rapport aux dispositifs connus de la technique antérieure.

L'invention trouve des applications multiples, par exemple pour le diagnostic de pathologies génétiques (cancer, diabète, obésité, maladies cardio-vasculaires, etc.), pour la mise au point de médicaments (à expression génétique), pour des tests alimentaires et environnementaux (contrôle bactériologique, viral et transgénique), en recherche biologique fondamentale (séquençage génomique, etc).

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- les figures 1 et 2 sont des vues partielles à grande échelle, en coupe et de dessus respectivement d'un dispositif selon l'invention ;
- la figure 3 représente schématiquement des moyens de détection et de mesure associés à un dispositif selon l'invention ;
- les figures 4 et 5 sont des vues semblables aux figures 1 et 2, pour une variante de réalisation;
- la figure 6 est une vue partielle agrandie d'un exemple de pavage d'un cristal ou quasi-cristal photonique.

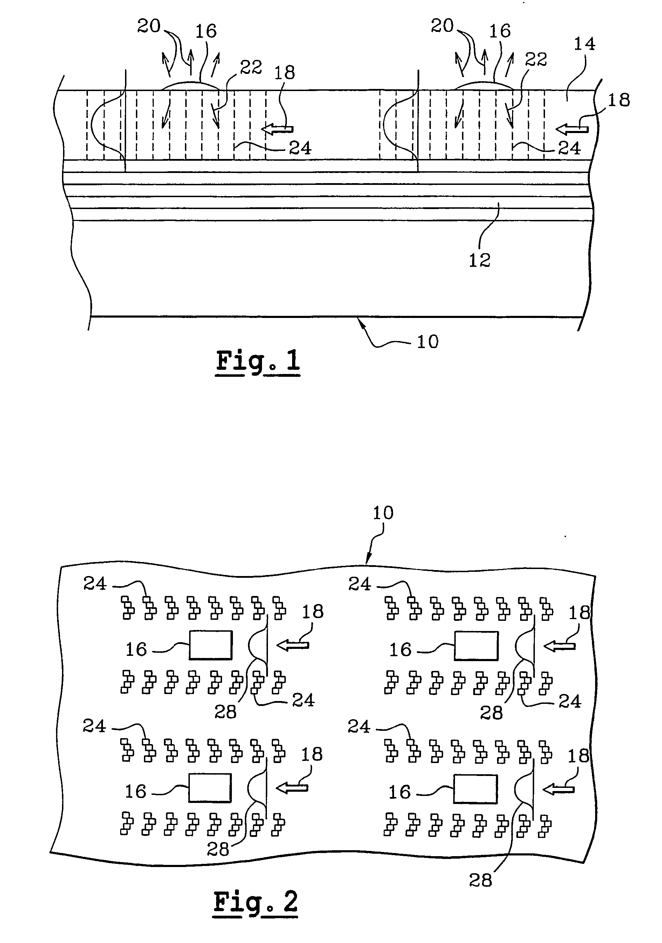

Dans l'exemple de réalisation des figures 1 et 2, la référence 10 désigne un substrat en une matière quelconque appropriée, par exemple en verre, en silice, en métal, en matière semi-conductrice ou en oxyde, ce substrat comportant un miroir intermédiaire multicouche non absorbant 12 formé d'une pluralité de couches diélectriques ou métalliques, recouvert d'une couche 14 d'un matériau d'indice de réfraction relativement élevé, c'est-à-dire ici un matériau dont l'indice de réfraction est supérieur ou égal à 1,6. Par exemple, ce matériau est du TiO₂ ayant un indice de réfraction égal à 2,4.

Des éléments chromophores 16 sont fixés sur la face supérieure de la couche 14.

Comme indiqué plus haut, ces éléments chromophores peuvent être formés par des sondes fixées sur la face supérieure de la couche 14, ou bien par des molécules à analyser qui viendront se coupler aux sondes qui leur sont appariées.

Ces sondes constituent un réseau à la surface de la couche 14 et se trouvent en des positions connues.

Typiquement, les éléments chromophores 16 sont sur des carrés dont les côtés sont compris entre quelques dizaines de µm et 1 mm environ. Ils forment une couche optiquement très mince à la surface de la couche 14 et cette couche très mince ne donne lieu qu'à une faible diffusion de lumière guidée.

L'excitation des éléments chromophores 16 est faite au moyen d'un faisceau lumineux sensiblement monochromatique de longueur d'onde prédéterminée, qui est couplé dans la couche 14 soit par une tranche de cette couche, soit au moyen d'un réseau de couplage formé à la surface de la couche 14 d'une façon connue de l'homme du métier, au moyen par exemple d'une couche mince de résine photosensible à modulation d'épaisseur faible.

Ce faisceau d'excitation est représenté schématiquement en 18 aux figures 1 et 2.

Les éléments chromophores 16 excités par le faisceau 18 émettent en réponse une luminescence ou fluorescence dont une partie 20 est rayonnée vers le haut dans une direction sensiblement perpendiculaire à la couche 14 et peut être captée directement par des moyens de détection optique et de mesure et dont une autre partie 22 est rayonnée dans le mode guidé dans la couche 14 et est extraite de celle-ci à l'aide de réseaux d'extraction 24 formés dans la couche 14 au voisinage des éléments chromophores 16 et de part et d'autre de ces derniers.

Plus précisément, les éléments chromophores 16 sont agencés à la surface de la couche 14 en bandes ou rangées parallèles 26 sensiblement équidistantes, qui sont chacune éclairées par un faisceau lumineux d'excitation 18 collimaté, ayant une largeur faible du même ordre de grandeur que la dimension correspondante d'un élément chromophore 16. Ces faisceaux 18 à faible divergence, par exemple inférieure à 20 mrad, conservent une largeur de faisceau comprise entre 50 et 100 µm environ sur une longueur de plusieurs millimètres, dans le cas d'un faisceau laser de lumière visible, ces faisceaux étant par exemple du type gaussien dans le plan de la figure 2, comme représenté en 28 avec un ventre au milieu de chaque bande 26.

Chaque faisceau d'excitation 18 peut être produit par une diode laser séparée et est collimaté au moyen d'optiques cylindriques.

Les réseaux d'extraction 24 se trouvent sur les côtés des bandes 26, de part et d'autre des éléments chromophores 16 par rapport à la direction du faisceau lumineux d'excitation 18 et s'étendent sur une longueur suffisante parallèlement à la direction du faisceau d'excitation 18 pour intercepter la majeure partie (environ 80%) de la lumière émise en mode guidé par chaque élément chromophore 16 dans la couche 14 de matériau à indice de réfraction élevé. Par exemple, la longueur des réseaux 24 est d'environ trois fois la dimension correspondante d'un élément chromophore.

Il est connu qu'un dipôle, placé au voisinage immédiat d'une interface entre deux milieux d'indice assez différents, comme c'est le cas de la couche 14 précitée et de la couche qui la recouvre (gaz ou liquide), a tendance à rayonner la majeure partie de son émission lumineuse dans le milieu d'indice le plus élevé, à des angles qui sont en dessous de l'angle critique de sorte que cette émission est convertie en mode guidé dans la structure planaire formée par le matériau d'indice élevé.

Dans le cas présent, les éléments chromophores 16 placés à l'interface entre la couche 14 et la couche de fluide (gaz ou liquide) qui la recouvre ont tendance à rayonner la majeure partie de leur luminescence ou fluorescence dans la couche 14, et ce rayonnement est converti en mode guidé dans cette couche.

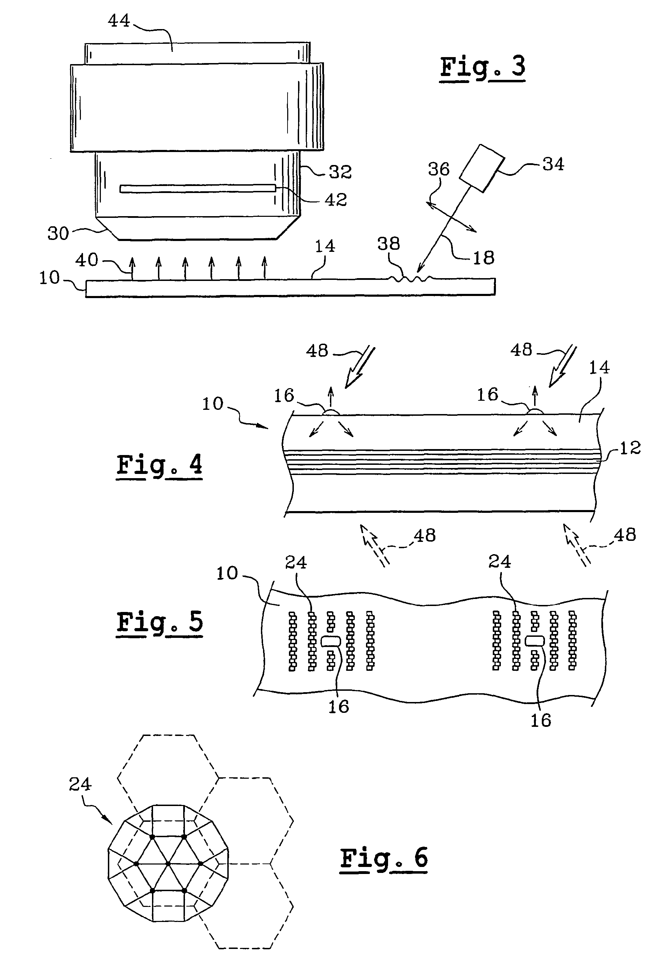

Les réseaux d'extraction 24 formés de part et d'autre des éléments chromophores 16 sur les côtés des bandes 26 ont pour fonction d'extraire cette lumière en mode guidé et de la diriger sensiblement perpendiculairement à la couche 14 vers des moyens de détection optique et de mesure situés au-dessus de cette couche, comme on le verra en référence à la figure 3.

Les moyens d'extraction 24 sont des cristaux ou quasi-cristaux photoniques planaires, formés par des ensembles par exemple périodiques de trous percés à travers la couche 14 et qui constituent une configuration ou structuration tridimensionnelle diffractante, les dimensions et espacements de ces trous étant de l'ordre de la longueur d'onde de la lumière en mode guidé dans la couche 14, l'épaisseur de cette couche étant par exemple d'environ 1 µm ou moins.

Préférentiellement, ces cristaux ou quasi-cristaux photoniques 24 sont des pavages de polygones sensiblement jointifs et reliés à des polygones voisins par chacun de leurs côtés, ce pavage pouvant se présenter sous de nombreuses formes, le motif du réseau pouvant être par exemple un triangle équilatéral, un losange, un carré ou un hexagone. Dans ce pavage, les trous de la couche 14 (ou de manière équivalente des colonnes de matière séparées par des trous) se trouvent sur les côtés des polygones du pavage ou sur les sommets de ces polygones.

Ce pavage peut comporter une ou plusieurs lacunes de façon à former une structure de type amorphe. Il constitue une structure diffractante qui permet d'extraire la lumière guidée de la couche 14, pour une incidence quasi-omnidirectionnelle dans le plan de cette couche.

Les trous formant cette structure peuvent être réalisés par tout moyen approprié, par exemple par un procédé de lithographie planaire, dérivé de la microélectronique.

Typiquement, les réseaux d'extraction 24 formés de part et d'autre des éléments chromophores 16 ont une longueur égale par exemple à trois fois la longueur de l'élément chromophore et une largeur de quelques µm, ce qui permet d'avoir une distance faible entre bandes 26 excitées, par exemple d'environ 20 à 50 µm seulement, et d'obtenir une très grande compacité du dispositif selon l'invention.

De plus, la couche 14 de matériau d'indice relativement élevé constitue une microcavité planaire résonante délimitée par le miroir multicouche 12 précité et par le dioptre formé à l'interface entre la couche 14 et le milieu fluide (gaz ou liquide) environnant. Cette microcavité a une épaisseur choisie pour renvoyer un maximum de la lumière émise par les éléments chromophores 16 dans un objectif 30 des moyens de détection et de mesure 32 qui sont représentés schématiquement en figure 3.

Dans cette figure, la référence 34 désigne des moyens, tels qu'une diode laser par exemple, de génération d'un faisceau lumineux d'excitation 18 collimaté au moyen par exemple d'une optique cylindrique 36 et couplée dans la couche 14 par un réseau 38 à faible modulation d'épaisseur.

Les références 40 désignent à la fois la lumière renvoyée directement par la microcavité planaire en direction de l'objectif 30 et la lumière extraite de la couche 14 par les réseaux d'extraction 24.

Les moyens de détection et de mesure 32 comprennent des filtres réjecteurs 42 laissant passer la lumière à la longueur d'onde d'émission par les éléments chromophores 16 en direction d'une matrice 44 de photodétecteurs du type CCD ou analogues.

La combinaison de la microcavité planaire résonante formée par la couche 14 et des réseaux d'extraction sensiblement omnidirectionnels 24 permet de récupérer et de diriger vers l'objectif 30 la plus grande partie de la lumière émise par les éléments chromophores 14 en réponse à l'excitation par les faisceaux lumineux 18. L'amélioration du gain en sensibilité des moyens de détection et de mesure a pour conséquence directe l'amélioration de plusieurs paramètres opérationnels tels que :
- la rapidité d'analyse : ce paramètre est souvent limité par la puissance du signal lumineux collecté, qui est ici fortement augmentée,
- la quantité minimale requise de produits à analyser : ce paramètre peut être réduit selon l'invention en correspondance du gain obtenu en sensibilité optique,
- le rapport volume/poids des dispositifs selon l'invention : ce paramètre est directement lié au précédent, ce qui donne la possibilité de réaliser des matériels portatifs, avec tous les avantages opérationnels inhérents à ces derniers,
- la précision des mesures : elle est d'autant plus importante quand un grand nombre de sondes sont portées par un même substrat, car cela nécessite une grande précision pour la localisation géométrique du signal lumineux détecté,
- le besoin en puissance d'émission primaire ce paramètre est déterminant pour des composés biologiques particulièrement fragiles et qui seraient partiellement détruits ou altérés par une puissance optique dépassant leur seuil de tolérance admissible,
- la taille de spectre d'analyse accessible : le nombre de sondes différentes sur un même substrat peut être très largement augmenté grâce à l'amélioration de la sensibilité de mesure.

De plus, le dispositif selon l'invention est utilisable avec des faisceaux lumineux d'excitation de longueurs d'onde différentes pour la détection et la mesure de réponses lumineuses d'éléments chromophores à des longueurs d'ondes différentes (utilisation de chromophores de «couleurs différentes»).

Dans ce cas, la microcavité résonante délimitée par le miroir 12 et par le dioptre à l'interface entre la couche 14 et le milieu environnant, doit être accordée sur plusieurs longueurs d'onde à la fois, ces longueurs d'onde étant celles des maxima d'émission des éléments chromophores en réponse à des excitations lumineuses de longueurs d'onde différentes. Pour cela, l'épaisseur de la cavité est sensiblement plus importante qu'indiqué précédemment. Par exemple, si les longueurs d'onde des maxima d'émission des éléments chromophores 16 sont de 550 et 680 nm, une épaisseur de cavité (épaisseur de la couche 14) comprise entre 1 et 2 µm environ en fonction de l'indice, permet d'assurer cette double résonance. De plus, on peut aussi modifier la profondeur de pénétration du miroir multicouche 12 par des moyens bien connus de l'homme du métier.

Dans la variante de réalisation représentée schématiquement aux figures 4 et 5, les éléments chromophores 16 portés par la couche 14 du substrat 10 sont excités par des faisceaux lumineux monochromatiques 48 extérieurs au substrat 10 et orientés soit vers la face du substrat qui porte les éléments chromophores, comme représenté en traits pleins, soit vers la face opposée de ce substrat comme représenté en traits pointillés.

Dans cette variante, comme l'excitation lumineuse n'est pas guidée dans la couche 14 d'indice élevé, les moyens d'extraction 24 peuvent entourer à peu près complètement les éléments chromophores 16, comme représenté en figure 5.

Les moyens d'extraction 24 sont définis par des pavages qui peuvent être très divers et sont constitués de polygones convexes sensiblement jointifs et partageant chacun de leurs côtés avec un seul voisin, ces côtés ayant sensiblement la même taille.

Pour augmenter le rendement d'extraction, il est préférable d'utiliser des pavages complexes, présentant des niveaux de symétrie supérieurs à 6. Il peut s'agir par exemple de pavages d'Archimède formés à partir de triangles équilatéraux et de carrés dont les côtés ont tous la même taille, comme représenté en figure 6, les trous ou colonnes du cristal ou du quasi-cristal photonique se trouvant par exemple aux sommets des polygones.

Ces pavages peuvent être formés de proportions sensiblement égales ou comparables de carrés ou de triangles équilatéraux, ou de premiers et seconds losanges ayant des angles au sommet différents. Ils peuvent être construits par périodisation d'un motif comprenant un nombre choisi de triangles équilatéraux et de carrés, ou par inflation de Stampfli d'un tel motif, ou encore par une distribution aléatoire de proportions choisies de carrés et de triangles équilatéraux, ou de premiers et de seconds losanges.

Par ailleurs, le cristal ou quasi-cristal photonique peut être réalisé sous la forme d'un pavage tel que décrit ci-dessus, et dans lequel l'un au moins des éléments diffractants est omis, de manière à former une structure de type amorphe.

## Revendications

1. Dispositif perfectionné du type bio-puce, comprenant un substrat (10), qui comporte un miroir multicouche non absorbant (12) recouvert d'une couche supérieure (14) qui porte des éléments chromophores (16), et des moyens de récupération de la lumière émise par les éléments chromophores (16) en réponse à une excitation lumineuse, ces moyens comprenant des moyens d'extraction de lumière en mode guidé formés par une configuration ou structuration tridimensionnelle diffractante de ladite couche supérieure (14), **caractérisé en ce que** la couche supérieure (14), est en matériau à indice de réfraction élevé supérieur ou égal à 1,6, les éléments chromophores étant agencés en bandes parallèles sur ladite couche supérieure (14) et les moyens d'extraction de lumière étant agencés sur les côtés des bandes d'éléments chromophores (12).

2. Dispositif selon la revendication 1, **caractérisé en ce que** les moyens d'extraction sont formés par des ensembles (24) de trous percés à travers ladite couche (14) et constituant des cristaux ou quasi-cristaux photoniques planaires.

3. Dispositif selon la revendication 2, **caractérisé en ce que** les ensembles (24) de trous sont périodiques.

4. Dispositif selon la revendication 2 ou 3, **caractérisé en ce que** les dimensions et espacements des trous de la couche (14) sont de l'ordre de la longueur d'onde de la lumière en mode guidé.

5. Dispositif selon l'une des revendications précédentes, **caractérisé en ce que** ladite couche (14) de matériau à indice de réfraction élevé, le miroir multicouche (12) précité et le dioptre entre ledit matériau à indice de réfraction élevé et le milieu environnant (gaz ou liquide) constituent une microcavité planaire résonante.

6. Dispositif selon l'une des revendications précédentes, **caractérisé en ce que** ladite couche (14) de matériau à indice de réfraction élevé constitue un guide d'onde planaire dans lequel est couplée la lumière d'excitation des éléments chromophores (16), soit par une tranche de ladite couche (14), soit au moyen d'au moins un réseau de couplage (38) formé à la surface de ladite couche (14).

7. Dispositif selon l'une des revendications 1 à 5, **caractérisé en ce que** les éléments chromophores (16) sont excités par des faisceaux lumineux externes (48) dirigés sur la face du substrat portant les éléments chromophores, ou sur la face du substrat opposée à celle portant les éléments chromophores.

8. Dispositif selon l'une des revendications précédentes, **caractérisé en ce que** les éléments chromophores (16) ont des dimensions comprises entre quelques dizaines de µm et 1 mm environ.

9. Dispositif selon l'une des revendications 6 à8, **caractérisé en ce que** les éléments chromophores (16) d'une bande sont excités par un faisceau lumineux (18) collimaté à faible divergence, ayant une largeur inférieure ou égale à la dimension correspondante d'un élément chromophore (16).

10. Dispositif selon la revendication9, **caractérisé en ce que** les faisceaux lumineux d'excitation (18) des différentes bandes (26) d'éléments chromophores sont produits par des moyens différents, par exemple par des diodes laser différentes.

11. Dispositif selon l'une des revendications 6 à10, **caractérisé en ce que** les moyens d'extraction de lumière en mode guidé sont agencés en réseaux (24) le long de la ou de chaque bande (26) d'éléments chromophores, de part et d'autre de ces éléments.

12. Dispositif selon l'une des revendications 7 à10, **caractérisé en ce que** les moyens (24) d'extraction de lumière en mode guidé entourent chaque élément chromophore (16).

13. Dispositif selon la revendication 11 ou 12, **caractérisé en ce que** les moyens d'extraction (24) forment des pavages de polygones sensiblement jointifs, s'étendant le long de chaque élément chromophore (16) sur une distance égale à plusieurs fois la dimension correspondante de l'élément chromophore.

14. Dispositif selon l'une des revendications 11 à 13, **caractérisé en ce que** les moyens d'extraction (24) ont une largeur ou dimension transversale faible par rapport à la dimension correspondante d'un élément chromophore, cette largeur ou dimension transversale étant par exemple de quelques µm.

15. Dispositif selon l'une des revendications précédentes, **caractérisé en ce que** l'épaisseur de ladite couche (14) de matériau à indice élevé est inférieure ou égale à 1 µm environ.

16. Dispositif selon l'une des revendications 5 à15, **caractérisé en ce que** l'épaisseur de ladite couche (14) de matériau à indice élevé est déterminée pour que ladite cavité résonante soit accordée sur au moins deux longueurs d'onde différentes correspondant à des maxima d'émission lumineuse des éléments chromophores (16).

## Claims

1. An improved biochip type device comprising a substrate (10),which includes a non-absorbent multilayer (12) covered by an upper layer (14) carrying chromophore elements (16), and means for picking up the light emitted by the chromophore elements (16) in response to light excitation, these means comprising means for extracting light in guided mode formed by a diffracting three-dimensional configuration or structuring of said upper layer (14), the device being **characterized in that** the upper layer (14) is of material having high refractive index greater than or equal to about 1.6, the chromophore elements (16) being arranged on said layer (14) in parallel rows and the light extraction means being arranged on the sides of the rows of chromophore elements (16).

2. A device according to claim 1, **characterized in that** the extraction means are formed by sets (24) of holes formed through said layer (14) and constituting planar photonic crystals or quasi-crystals.

3. A device according to claim 2, **characterized in that** the sets (24) of holes are periodic.

4. A device according to claim 2 or claim 3, **characterized in that** the dimensions and the spacings of the holes of the layer (14) are of the same order as the wavelength of the light in guided mode.

5. A device according to any preceding claim, **characterized in that** said layer (14) of high refractive index material, the above-mentioned multilayer mirror (12), and the interface surface between said high refractive index material and the surrounding medium (gas or liquid) together constitute a resonant planar microcavity.

6. A device according to any preceding claim, **characterized in that** said layer (14) of high refractive index material constitutes a planar waveguide into which the excitation light for the chromophore elements (16) is coupled, either through an edge of said layer (14), or by means of at least one coupling grating (38) formed on the surface of said layer (14).

7. A device according to any one of claims 1 to 5, **characterized in that** the chromophore elements (16) are excited by external light beams (48) directed against the face of the substrate carrying the chromophore elements, or against the face of the substrate opposite from that carrying the chromophore elements.

8. A device according to any preceding claim, **characterized in that** the chromophore elements (16) are of dimensions lying in the range a few tens of µm to 1 mm, approximately.

9. A device according to any one of claims 6 to 8, **characterized in that** the chromophore elements (16) of a row or strip are excited by a low-divergence collimated light beam (18) of width less than or equal to the corresponding dimension of a chromophore element (16).

10. A device according to claim 9, **characterized in that** the excitation light beams (18) of the various strips (26) of chromophore elements are produced by different means, e.g. by different laser diodes.

11. A device according to any one of claims 6 to 10, **characterized in that** the means for extracting guided-mode light are arranged in gratings (24) along the or each strip (26) of chromophore elements, on either side of said elements.

12. A device according to any one of claims 7 to 10, **characterized in that** the means (24) for extracting guided-mode light surrounds each chromophore element (16).

13. A device according to claim 11 or claim 12, **characterized in that** the extraction means (24) form tilings of substantially touching polygons extending along each chromophore element (16) over a distance equal to several times the corresponding dimension of the chromophore element.

14. A device according to any one of claims 11 to 13, **characterized in that** the extraction means (24) are of a width or transverse dimension that is small relative to the corresponding dimension of a chromophore element, said width or transverse dimension being, for example, a few µm.

15. A device according to any preceding claim, **characterized in that** the thickness of said layer (14) of high index material is less than or equal to 1 µm approximately.

16. A device according to any one of claims 5 to 15, **characterized in that** the thickness of said layer (14) of high index material is determined so that said resonant cavity is tuned to at least two different wavelengths corresponding to light emission maxima of the chromophore elements (16).

## Patentansprüche

1. Weiterentwickelte Vorrichtung von der Art Biochip, ein Substrat (10) aufweisend, das einen nicht absorbierenden Mehrschichtspiegel (12) umfasst, der mit einer oberen Schicht (14) bedeckt ist, die chromophore Elemente (16) trägt, und Einrichtungen zur Rückgewinnung des von den chromophoren Elementen (16) im Ansprechen auf eine Lichtanregung abgegebenen Lichts, wobei diese Einrichtungen Extraktionseinrichtungen für Licht in geleitetem Modus umfassen, die durch eine dreidimensionale, beugende Konfiguration oder Strukturierung der oberen Schicht (14) gebildet sind, **dadurch gekennzeichnet, dass** die obere Schicht (14) aus einem Material mit hohem Brechungsindex von größer oder gleich 1,6 besteht, wobei die chromophoren Elemente in parallelen Streifen auf der oberen Schicht (14) angeordnet sind und die Lichtextraktionseinrichtungen auf den Seiten der Streifen der chromophoren Elemente (12) angeordnet sind.

2. Vorrichtung nach Anspruch 1, **dadurch gekennzeichnet, dass** die Extraktionseinrichtungen durch Gruppen (24) von Löchern gebildet sind, die durch die Schicht (14) gebohrt sind und planare Photonenkristalle oder Photonen-Quasikristalle darstellen.

3. Vorrichtung nach Anspruch 2, **dadurch gekennzeichnet, dass** die Gruppen (24) von Löchern regelmäßig wiederkehrend sind.

4. Vorrichtung nach Anspruch 2 oder 3, **dadurch gekennzeichnet, dass** die Abmessungen und Abstände der Löcher der Schicht (14) in der Größenordnung der Wellenlänge des Lichts in geleitetem Modus sind.

5. Vorrichtung nach einem der vorhergehenden Ansprüche, **dadurch gekennzeichnet, dass** die Schicht (14) aus Material mit hohem Brechungsindex, der vorgenannte Mehrschichtspiegel (12) und das Diopter zwischen dem Material mit hohem Brechungsindex und dem umgebenden Medium (Gas oder Flüssigkeit) einen planaren Resonanzmikrohohlraum bilden.

6. Vorrichtung nach einem der vorhergehenden Ansprüche, **dadurch gekennzeichnet, dass** die Schicht (14) aus Material mit hohem Brechungsindex einen planaren Wellenleiter bildet, in den das Anregungslicht der chromophoren Elemente (16) entweder durch einen Abschnitt der Schicht (14) oder mittels mindestens eines Koppelnetzes (38) eingekoppelt wird, das auf der Oberfläche der Schicht (14) ausgebildet ist.

7. Vorrichtung nach einem der Ansprüche 1 bis 5, **dadurch gekennzeichnet, dass** die chromophoren Elemente (16) durch externe Strahlenbündel (48) angeregt werden, die auf die Fläche des die chromophoren Elemente tragenden Substrats oder auf die Fläche des Substrats gerichtet werden, die derjenigen entgegengesetzt ist, welche die chromophoren Elemente trägt.

8. Vorrichtung nach einem der vorhergehenden Ansprüche, **dadurch gekennzeichnet, dass** die chromophoren Elemente (16) Abmessungen zwischen einigen zehn µm und ca. 1 mm haben.

9. Vorrichtung nach einem der Ansprüche 6 bis 8, **dadurch gekennzeichnet, dass** die chromophoren Elemente (16) eines Streifens durch ein kollimiertes Strahlenbündel mit geringer Divergenz angeregt werden, das eine Breite hat, die kleiner als die entsprechende Abmessung oder gleich der entsprechenden Abmessung eines chromophoren Elements (16) ist.

10. Vorrichtung nach Anspruch 9, **dadurch gekennzeichnet, dass** die Strahlenbündel (18) zur Anregung der verschiedenen Streifen (26) der chromophoren Elemente durch verschiedene Einrichtungen, zum Beispiel durch Laserdioden erzeugt werden.

11. Vorrichtung nach einem der Ansprüche 6 bis 10, **dadurch gekennzeichnet, dass** die Extraktionseinrichtungen für Licht in geleitetem Modus in Netzen (24) entlang des oder jedes Streifens (26) der chromophoren Elemente auf beiden Seiten dieser Elemente angeordnet sind.

12. Vorrichtung nach einem der Ansprüche 7 bis 10, **dadurch gekennzeichnet, dass** die Extraktionseinrichtungen (24) für Licht in geleitetem Modus jedes chromophore Element (16) umgeben.

13. Vorrichtung nach Anspruch 11 oder 12, **dadurch gekennzeichnet, dass** die Extraktionseinrichtungen (24) Beläge aus im Wesentlichen aneinander anstoßenden Polygonen bilden, die sich entlang jedes chromophoren Elements (16) über eine Strecke erstrecken, die gleich der mehrfachen entsprechenden Abmessung des chromophoren Elements ist.

14. Vorrichtung nach einem der Ansprüche 11 bis 13, **dadurch gekennzeichnet, dass** die Extraktionseinrichtungen (24) eine geringe Breite oder Querabmessung in Bezug auf die entsprechende Abmessung eines chromophoren Elements haben, wobei diese Breite oder Querabmessung zum Beispiel einige µm beträgt.

15. Vorrichtung nach einem der vorhergehenden Ansprüche, **dadurch gekennzeichnet, dass** die Dicke der Schicht (14) mit hohem Brechungsindex kleiner als oder gleich ca. 1 µm ist.

16. Vorrichtung nach einem der Ansprüche 5 bis 15, **dadurch gekennzeichnet, dass** die Dicke der Schicht (14) mit hohem Brechungsindex so bestimmt ist, dass der Resonanzhohlraum auf mindestens zwei verschiedene Wellenlängen abgestimmt ist, die den höchsten Lichtabgabewerten der chromophoren Elemente (16) entsprechen.
